Europäisches Patentamt

European Patent Office

Office européen des brevets

(19)

(11) Veröffentlichungsnummer: **0 216 275 B1**

## (12) EUROPÄISCHE PATENTSCHRIFT

(45) Veröffentlichungstag der Patentschrift: **15.07.92**

(51) Int. Cl.⁵: **G06F 7/06**, B07C 3/00

(21) Anmeldenummer: **86112654.8**

(22) Anmeldetag: **12.09.86**

(54) **Verfahren zur mikroprozessorgesteuerten Überwachung und Steuerung des Beleglaufs in einer Belegverarbeitungseinrichtung.**

(30) Priorität: **26.09.85 DE 3534347**

(43) Veröffentlichungstag der Anmeldung:
**01.04.87 Patentblatt 87/14**

(45) Bekanntmachung des Hinweises auf die
Patenterteilung:
**15.07.92 Patentblatt 92/29**

(84) Benannte Vertragsstaaten:
**AT BE CH DE FR GB IT LI NL SE**

(56) Entgegenhaltungen:
**DE-A- 3 247 862**
**FR-A- 2 285 192**

(73) Patentinhaber: **CGK Computer Gesellschaft
Konstanz mbH
Max-Stromeyer-Strasse 116
W-7750 Konstanz(DE)**

(72) Erfinder: **Urban, Michael
Rossittenstrasse 9
W-7760 Radolfszell(DE)**

(74) Vertreter: **Fuchs, Franz-Josef, Dr.-Ing. et al
Postfach 22 13 17
W-8000 München 22(DE)**

EP 0 216 275 B1

## Beschreibung

Die Erfindung betrifft ein verfahren zur mikroprozessorgesteuerten Überwachung und Steuerung des Beleglaufs in einer Belegverarbeitungseinrichtung nach dem Oberbegriff des Patentanspruchs 1.

Es sind bereits Belegverarbeitungseinrichtungen bekannt, bei denen der Beleglauf durch Lichtschranken oder ähnliche Signalgeber überwacht und mit Hilfe eines Mikroprozessors unter Auswertung der Lichtschrankensignale gesteuert werden kann. Im besonderen gilt dies für die Überwachung der Belege auf ihrem Weg in jeweils eines von mehreren Ablagefächern durch eine entsprechende Steuerung der vor den einzelnen Ablagefächern jeweils angeordneten Fachweichen sowie für die Überwachung innerhalb des Ablagefachs im Hinblick auf eine richtige oder falsche Belegablage.

In der FR-A 2 285 192 ist eine Einrichtung zum Sortieren von Briefen und Belegen ähnlicher Art beschrieben, die ein modulartig aufgebautes Verteilungssystem zum Transport der Belege in zugehörige Ablagefächer aufweist. Das System umfaßt den Fächern zugeordnete Weichen sowie Fotozellen, die jeweils am Anfang der einzelnen Wegstrekken identischer Länge angeordnet sind. Die Überwachung des Sortiervorgangs übernimmt eine Steuereinrichtung, die beispielsweise aus einem Prozessor mit angeschlossenem Speicher und speziellen Registern besteht.

Der Prozessor benutzt dabei eine Tabelle, deren Einträge jeweils von vier in den speziellen Registern gespeicherten Codewörtern gebildet werden. Die gespeicherten Wörter enthalten Informationen über einen Beleg, seine Adresse und über die zugeordnete Weiche sowie Steuerinformationen für den Beleglauf. Beim Vorbeilauf eines Belegs an einer Fotozelle wird ein Unterbrechungssignal für den Prozessor erzeugt. Der Zählerstand eines Binärzählers, der eine Vorrichtung zur Auswertung der von den Fotozellen gelieferten Signale steuert, wählt anschließend einen Eintrag in der Tabelle aus. Die Beleginformationen werden ausgelesen und in den Speicher des Prozessors eingetragen. Die Auswahlinformation für die zu betätigende Weiche wird ebenfalls einem der Codewörter entnommen, wobei die Stellung der Weiche durch Vergleich der Beleginformation mit der im Codewort enthaltenen Information festgelegt wird.

Zur Überwachung des Sortiervorgangs können eine Reihe von Kontrollen durchgeführt werden. Eine der Kontrollen besteht beispielsweise darin, zu vorgegebenen Zeitpunkten nach Passieren des Belegs an der Fotozelle zu überprüfen, ob die Zelle wieder auf hell geschaltet ist. Ist dies nicht der Fall, wird eine Fehlermeldung erzeugt.

Aus der DE-A 3 247 862 ist eine Schaltungsanordnung zur Steuerung und Überwachung des Beleglaufs in einer Belegverarbeitungseinrichtung bekannt. Die Beleglaufstrecke ist dabei in einzelne Überwachungsplätze unterteilt, denen jeweils eine eingangsseitige und eine ausgangsseitige Lichtschranke zugeordnet sind. Diese Lichtschranken überwachen nach einem An- und Abmeldeprinzip den Weg der einzelnen Belege in eines von mehreren Ablagefächern. Den Ablagefächern sind Fachweichen zugeordnet, durch deren Steuerung die Belege in die Fächer gelangen.

Der vorliegenden Erfindung liegt nun die Aufgabe zugrunde, für eine mikroprozessorgesteuerte Belegverarbeitungseinrichtung eine möglichst einfache Lösung anzugeben, die für jeden an einer Eingangslichtschranke auftretenden Beleg folgenden Bedingungen genügt:

1. Die für den Beleglauf jeweils in Betracht kommende Fachweiche ist für eine bestimmte, je nach Länge des Beleges unterschiedlich lange Zeitdauer zeitlich verzögert anzusteuern.

2. Ebenfalls zeitlich verzögert ist das Passieren des Beleges vor einer der vorhandenen Fachlichtschranken dahingehend zu überwachen, ob der Beleg in das richtige Ablagefach transportiert worden ist.

3. Die Bedingungen nach Ziff. 1 und 2 müssen auch dann eingehalten werden, wenn sich mehrere Belege unterschiedlicher Länge gleichzeitig in der Fachstrecke eines mehrere Ablagefächer aufweisenden Ablagemoduls befinden.

Die Lösung dieser Aufgabe ergibt sich erfindungsgemäß durch die kennzeichnenden Merkmale des Patentanspruchs 1.

Vorteilhafte Weiterbildungen der Erfindung sind in den Unteransprüchen angegeben.

Ein Ausführungsbeispiel der Erfindung wird im folgenden anhand der Zeichnung näher erläutert. Dabei zeigen

FIG 1     den prinzipiellen Aufbau einer Belegverarbeitungseinrichtung im Bereich eines Ablagefach-Moduls

FIG 2     den Aufbau einer Speichertabelle mit innerhalb eines ersten Zeitraums stattfindenden Speichereinträgen

FIG 3     die Speichertabelle nach FIG 2 mit zusätzlichen Einträgen innerhalb eines zweiten Zeitraums

FIG 4     die spaltenweise Auswertung der in der Speichertabelle nach FIG 2 und 3 gespeicherten Daten

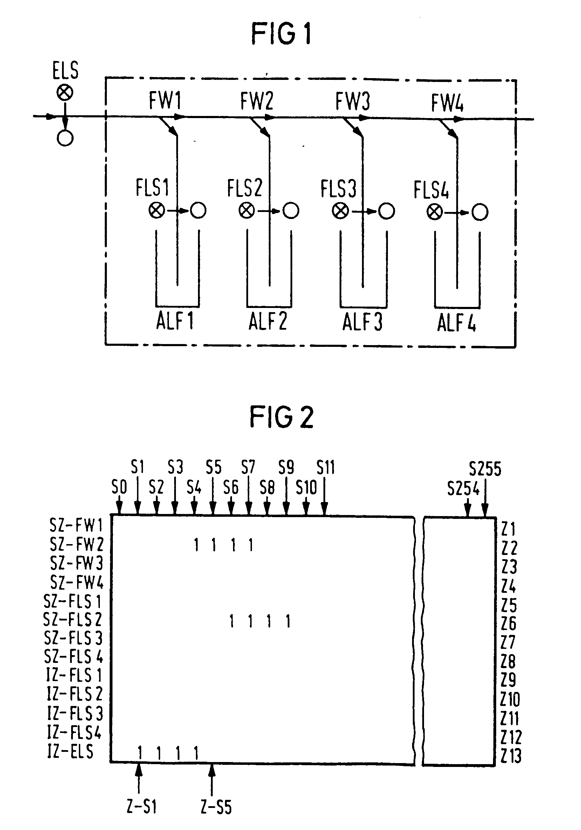

Die FIG 1 zeigt einen Ausschnitt aus einer Beleglaufstrecke einer Belegverarbeitungseinrichtung im Bereich einer sogenannten Fachstrecke mit vier Fachweichen FW1... FW4 und zugehörigen Ablagefächern ALF1...ALF4. Zur Überwachung des Beleglaufs ist am Beginn der Fachstrecke eine Eingangslichtschranke ELS und in jedem Ablagefach ALF1...ALF4 je eine Fachlichtschranke FLS1...FLS4 vorgesehen. Für die Speicherung der verschiedenen Lichtschrankensignale ist im Arbeitsspeicher des die Belegverarbeitungseinrichtung steuernden Mikrocomputers ein matrixartig aufgebauter Speicherbereich vorgesehen, dessen prinzipieller Aufbau aus FIG 2 ersichtlich ist.

Dieser in FIG 2 dargestellte Speicherbereich besteht z.B. aus 256 Spalten SO, S1...S255 zu je 13 Bit, die jeweils ein Speicherwort bilden, wobei den einzelnen Bitstellen, in der Reihenfolge von oben nach unten, folgende Signalzustände zugeordnet sind. Im einzelnen beinhalten die Bitstellen Z1 bis Z4 die jeweiligen Soll-Zustände SZ-FW1...SZ-FW4 der Fachweichen FW1...FW4, die Bitstellen Z5 bis Z8 bzw. Z9 bis Z12 die jeweiligen Soll-Zustände SZ-FLS1...SZ-FLS4 bzw. Ist-Zustände IZ-FLS1...IZ-FLS4 der Fachlichtschranken FLS1...FLS4 und die Bitstelle 13 schließlich den Ist-Zustand IZ-ELS der Eingangslichtschranke ELS. Entlang dieser Tabelle bewegt sich ein Zeiger Z, der alle 5 msec auf die nächste Spalte bzw. auf das nächste 13 Bit-Wort zyklisch weiterschaltet, wobei der Zeiger nach der Spalte 255 wieder auf die Spalte 0 zurückspringt.

Vor Beginn eines ersten Beglaufs sind nach einer Einschaltnormierung alle Bits gelöscht, d.h. alle Lichtschranken ELS, FLS1...FLS4 werden als hell erwartet und alle Weichen FW1...FW4 sind auf geraden Durchlauf gestellt. Der Zeiger Z steht in der Spalte Ø bzw. auf das Wort Ø. Nach 5 msec erscheine nun an der Eingangslichtschranke ELS ein Beleg, der aufgrund seiner Belegdaten z.B. in das zweite Ablagefach ALF2 transportiert werden soll. Der Zeiger zeigt auf die Spalte 1 - Zeigerstellung Z-S1 - bzw. auf das Wort 1, in welchem nun in der Bitstelle Z13 das Ist-Zustandsbit IZ-ELS der Eingangslichtschranke ELS gesetzt wird. Ferner sei angenommen, daß die Beleglaufzeit bis zur Fachweiche FW2 insgesamt 15 msec und bis zur Fachlichtschranke FLS2 im Ablagefach ALF2 insgesamt 25 msec betrage. Dementsprechend wird 15 msec/5msec = drei Worte später bzw. drei Spalten weiter rechts, d.h. in Spalte 4 das Soll-Zustandsbit SZ-FW2 für die Fachweiche FW2 und 25 msec/5 msec = fünf Worte bzw. Spalten später in Spalte 6 das Soll-Zustandsbit SZ-FLS2 gesetzt. Wenn der Zeiger nach jeweils 5 msec auf die nächste und die darauffolgenden Spalten gerückt wird, dann geschieht dasselbe solange, bis der gesamte Beleg die Eingangslichtschranke ELS passiert hat und diese wieder auf hell schaltet. Bereits beim Wort 4 wurde die Fachweiche FW2 aufgrund des gesetzten Bits für das Soll-Zustandssignal SZ-FW2 dieser Fachweiche in Richtung zweites Ablagefach ALF angesteuert. Diese Fachweiche FW2 bleibt dann solange angesteuert, solange das zugehöriger Soll-Zustandsbit gesetzt ist. Ebenso lang, aber zeitversetzt bleiben auch die Soll-Zustandsbits SZ-FLS2 der Fachlichtschranke FLS2 für das zweite Ablagefach ALF2 gesetzt.

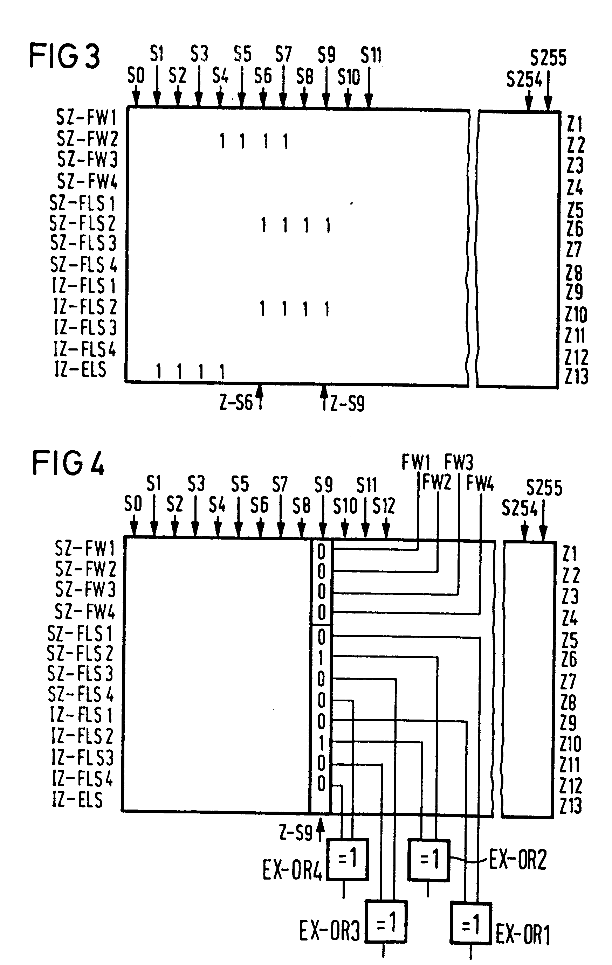

Wenn der Zeiger die Spalte 6 - Zeigerstellung Z-S6 - erreicht, wie dies in FIG 3 dargestellt ist, dann befindet sich auch der Beleg im vorgesehenen Ablagefach ALF2, wobei die Lichtschranke FLS2 beim Passieren des Beleges in Spale 6 ein erstes Ist-Zustandsbit IZ-FLS2 und anschließend in den Spalten S7 bis S9 noch weitere Ist-Zustandsbits setzt. Ab Wort 10 ist die Fachlichtschranke FLS2 wieder hell und sowohl das Soll-Zustandsbit SZ-FLS2 als auch das Istzustandsbit IZ-FLS2 haben beide wieder den Wert Ø. Der Beleg ist damit richtig abgelegt. Bereits bei Wort 8 wurde die Ansteuerung für die Fachweiche FW2 aufgrund des nicht mehr gesetzten Soll-Zustandsbits SZ-FLS2 wieder zurückgesetzt.

Die Auswertung der in der Speichertabelle gesetzten Signale ist aus FIG 4 ersichtlich. Dabei werden die pro Spalte auftretenden Soll-Zustandsbits SZ-FLS1...SZ-FLS4 der einzelnen Fachlichtschranken FLS...FLS4 mit den zugehörigen Ist-Zustandsbits IZ-FLS1...IZ-FLS4 über je ein EXKLUSIV-ODER-Glied EX-OR1...EX-OR4 miteinander verknüpft. Sowohl für das aktuelle Ablagefach ALF2 als auch für die drei anderen Ablagefächer ergibt sich im Normalfall Signalgleichheit, so daß an den Ausgängen aller EXKLUSIV-ODER-Glieder jeweils eine Ø auftritt. Der Beleg ist demnach richtig im zweiten Ablagefach ALF abgelegt. Im Falle einer Ungleichheit der beiden Eingangssignale an einem der EXKLUSIV-ODER-Glieder wird der Ort der Fehlablage bzw. eine eventuell ausgefallene Lichtschranke eindeutig erkannt und bestimmt. Die in den Zeilen Z1...Z4 auftretenden Sollzustandssignale SZ-FW1...SZ-FW4 dienen zur Ansteuerung der Weichentreiber. Gültig sind jeweils die Bits, auf die der Zeiger Z zeigt. Die Worte links vom Zeiger werden nicht mehr benötigt und werden vor dem nächsten Zeigerumlauf rechtzeitig gelöscht.

## Patentansprüche

1.   Verfahren zur mikroprozessorgesteuerten Überwachung und Steuerung des Beglaufs in einer Belegverarbeitungseinrichtung mit mehreren längs einer Fachstrecke angeordneten Fachweichen (z.B. FW1...FW4) und diesen jeweils zugeordneten Ablagefächern (z.B. ALF1...ALF4), unter Verwendung einer am Eingang der Fachstrecke angeordneten Eingangslichtschranke (ELS) und mehreren, jeweils einem Ablagefach (z.B. ALF1) zugeordneten Fachlichtschranken (z.B. FLS1), die nach dem An- und Abmeldeprinzip den Weg der einzelnen Belege in jeweils eines der Ablagefächer (z.B. ALF1...ALF4) überwachen, **dadurch ge-**

**kennzeichnet,** daß im Arbeitsspeicher des Mikroprozessors eine matrixartig aufgebaute Tabelle eröffnet wird, die pro Spalte (z.B. S4) je einen Speicherplatz für die Soll-Zustände (z.B. SZ-FW1...SZ-FW4 und SZ-FLS1...SZ-FLS4) der einzelnen Fachweichen und Fachlichtschranken, sowie für die Ist-Zustände (z.B. IZ-FLS1...IZ-FLS4 und IZ-ELS) der Fachlichtschranken und der Eingangslichtschranke bereitstellt, daß längs der Tabelle ein Zeiger (Z) in festem Taktraster von Spalte zu Spalte zyklisch weitergeschaltet wird, daß, ausgelöst durch einen die Eingangslichtschranke (ELS) passierenden Beleg und dessen durch die Belegdaten vorgegebene Wahl des Ablagefaches (z.B. ALF2), mit dem Setzen des Ist-Signals (IZ-ELS) für die Eingangslichtschranke in einer Startspalte (S1) gleichzeitig in denjenigen Spalten (z.B. S4,S6), die den jeweiligen Wegstrecken zwischen Eingangslichtschranke (ELS) und der ausgewählten Fachweiche (z.B. FW2) bzw. dem zugehörigen Ablagefach (z.B. ALF2) entsprechen, jeweils ein Soll-Signal (z.B. SZ-FW2,SZ-FLS2) für die ausgewählte Fachweiche bzw. Fachlichtschranke des ausgewählten Ablagefaches (z.B. ALF2) gesetzt wird, daß diese Soll-Signale in so vielen aufeinanderfolgenden Spalten (z.B. S5...S7,S7...S9) gesetzt werden, solange die Eingangslichtschranke (ELS) durch den Beleg dunkel gesteuert wird und entsprechende Ist-Signale in der Tabelle gesetzt werden, daß beim Belegeinlauf in das ausgewählte Ablagefach (z.B. ALF2) in mehreren aufeinanderfolgenden Spalten (z.B. S6...S9) in Abhängigkeit von der Länge des Beleges entsprechend viele Ist-Signale (z.B. IZ-FLS2) für die jeweilige Fachlichtschranke gesetzt werden und daß die den Soll- und Ist-Signalen (z.B. SZ-FLS2,IZ-FLS2) jeder Fachlichtschranke (z.B. FLS2) zugeordneten Speicherplätze spaltenweise auf Gleichheit geprüft werden und im Falle der Ungleichheit ein Fehlersignal gesetzt wird.

2. Verfahren nach Anspruch 1, **dadurch gekennzeichnet,** daß die Überwachung der einzelnen Ablagefächer (z.B. ALF1...ALF4) jeweils durch eine EXCLUSIV-ODER-Verknüpfung der Soll- und Ist-Zustandssignale (z.B. SZ-FLS2,IZ-FLS2), der dem jeweiligen Ablagefach (z.B. ALF2) zugeordneten Fachlichtschranke (z.B. FLS2) erfolgt.

3. Verfahren nach Anspruch 1 oder 2, **dadurch gekennzeichnet,** daß die gespeicherten Soll-Zustandssignale (z.B. SZ-FW1...SZ-FW4) für die Fachweichen (z.B. FW1...FW4) als Steuersignale für die den jeweiligen Fachweichen zugeordneten Weichentreiber verwendet werden.

## Claims

1. Method for the microprocessor-controlled supervision and control of the document stream in a document-processing unit having a plurality of compartment deflectors (e.g. FW1...FW4) arranged along a series of compartments and storage compartments assigned respectively thereto (e.g. ALF1...ALF4), using a photoelectric entry beam (ELS) arranged at the entry to the series of compartments and a plurality of photoelectric compartment beams (e.g. FLS1) which are assigned in each case to one storage compartment (e.g. ALF1) and supervise the path of the individual documents in one of the storage compartments (e.g. ALF1...ALF4) in each case according to the signing-on and signing-off principle, characterised in that a matrix-like table is opened in the working memory of the microprocessor, which table provides per column (e.g. S4) in each case one storage space for the reference states (e.g. SZ-FW1...SZ-FW4 and SZ-FLS1...SZ-FLS4) of the individual compartment deflectors and photoelectric compartment beams as well as for the actual states (e.g. IZ-FLS1...IZ-FLS4 and IZ-ELS) of the photoelectric compartment beams and of the photoelectric entry beam, in that along the table a pointer (Z) is cyclically moved on from column to column in a fixed timing sequence, in that, with the setting of the actual signal (IZ-ELS) for the photoelectric entry beam in a start column (S1) in each case a reference signal (e.g. SZ-FW2, SZ-FLS2) for the selected document deflector or photoelectric compartment beam of the selected storage compartment (e.g. ALF2) is simultaneously set in those columns (e.g. S4, S6) which correspond to the respective paths between the photoelectric entry beam (ELS) and the selected document deflector (e.g. FW2) or the associated storage compartment (e.g. ALF2), triggered by a document passing the photoelectric entry beam (ELS) and the document's selection, predetermined by the document data, of the storage compartment (e.g. ALF2), in that these reference signals are set in a certain number of successive columns (e.g. S5...S7, S7...S9) as long as the photoelectric entry beam (ELS) is deactivated by the document and corresponding actual signals are set in the table, in that a corresponding number of actual signals (e.g. IZ-FLS2) are set for the respective photoelectric compartment beam when the document runs into the selected storage compartment (e.g. ALF2) in a plurality of successive columns (e.g. S6...S9) as function of the length of the document, and in that the storage locations assigned to the reference and actual signals (e.g. SZ-FLS2, IZ-FLS2) of each photoelectric compartment beam (e.g. FLS2) of associated storage locations are tested column by column for identity and in the absence of identity an error signal is set.

2. Method according to Claim 1, characterised in that the supervision of the individual storage compartments (e.g. ALF1...ALF4) takes place in each case by means of an EXCLUSIVE OR logic connection of the reference and actual status signals (e.g. SZ-FLS2, IZ-FLS2) of the photoelectric compartment beam (e.g. FLS2) assigned to the respective storage compartment (e.g. ALF2).

3. Method according to Claim 1 or 2, characterised in that the stored reference status signals (e.g. SZ-FW1...SZ-FW4) for the document deflectors (e.g. FW1...FW4) are used as control signals for the deflector drivers assigned to the respective compartment deflectors.

**Revendications**

1. Procédé pour contrôler et commander, avec assistance par microprocesseur, l'acheminement de documents dans un dispositif de traitement de documents comportant plusieurs aiguillages de casiers (par exemple FW1... FW4) disposés le long d'une section à casiers, et des casiers de réception (par exemple ALF1...ALF4) associés respectivement à ces aiguillages, moyennant l'utilisation d'un relais photoélectrique d'entrée (ELS) disposé à l'entrée de la section à casiers, et de plusieurs relais photoélectriques de casiers (par exemple FLS1), qui sont associés à des casiers de réception respectifs (par exemple ALF1) et contrôlent, selon le principe de l'annonce d'arrivée et de départ, le trajet de déplacement des différents documents dans respectivement l'un des casiers de réception (par exemple ALF1...ALF4), caractérisé par le fait que dans la mémoire de travail du microprocesseur est formé un tableau agencé sous la forme d'une matrice et qui prépare, pour chaque colonne (par exemple S4), respectivement une place de mémoire pour les états de consigne (par exemple SZ-FW1... SZ-FW4 et SZ-FLS1... SZ-FLS4) des différents aiguillages de casiers et relais photoélectriques de casiers, ainsi que pour les états réels (par exemple IZ-FLS1... IZ-FLS4 et IZ-ELS) des relais photoélectriques de casiers et du relais photoélectrique d'entrée, qu'un index (Z) est avancé cycliquement le long du tableau, d'une colonne à la suivante, selon un pas de cadence fixe, que, d'une manière déclenchée par un document passant devant le relais photoélectrique d'entrée (ELS) et par le choix, prédéterminé par les données du document, du casier de réception (par exemple ALF2), lors du positionnement du signal réel (IZ-ELS) pour le relais photoélectrique d'entrée dans une colonne de départ (S1), respectivement un signal de consigne (par exemple SZ-FW2, SZ-FLS2) pour l'aiguillage ou le relais photoélectrique sélectionné du casier de réception sélectionné (par exemple ALF2) est positionné dans les colonnes (par exemple S4,S6), qui correspondent aux sections respectives de trajets entre le relais photoélectrique d'entrée (ELS) et l'aiguillage sélectionné de casier (par exemple FW2) ou le casier de réception associé (par exemple ALF2), que ces signaux de consigne sont positionnés dans autant de colonnes successives (par exemple S5...S7, S7...S9) tant que le relais photoélectrique d'entrée (ELS) est commandé à l'état éteint par le document et que des signaux réels correspondants sont positionnés dans le tableau, que lors de l'arrivée d'un document dans le casier de réception sélectionné (par exemple ALF2), un nombre correspondant de signaux réels (par exemple IZ-FLS2) pour les relais photoélectriques respectifs de casiers sont positionnés dans plusieurs colonnes successives (par exemple S6...S9) en fonction de la longueur du document, et que les emplacements de mémoire, associés aux signaux de consigne et aux signaux réels (par exemple SZ-FLS2, IZ-FLS2) de chaque relais photoélectrique de casier (par exemple FLS2) sont testés de manière à établir s'il y a identité colonne par colonne et qu'en cas d'absence d'identité, un signal d'erreur est positionné.

2. Procédé suivant la revendication 1, caractérisé par le fait que le contrôle de différents casiers de réception (par exemple ALF1...ALF4) est exécuté respectivement au moyen d'une combinaison OU-EXCLUSIF des signaux d'état de consigne et des signaux d'état réels (par exemple SZ-FLS2, IZ-FLS2), du relais photoélectrique de casier (par exemple FLS2) associé au casier de réception respectif (par exemple ALF2).

3. Procédé suivant la revendication 1 ou 2, caractérisé par le fait que les signaux d'état de consigne mémorisés (par exemple SZ-FW1...

SZ-FW4) pour les aiguillages de casiers (par exemple FW1...FW4) sont utilisés en tant que signaux de commande pour les étages de commande associés aux aiguillages respectifs de casiers.

# FIG 1

# FIG 2

## FIG 3

S0 S1 S2 S3 S4 S5 S6 S7 S8 S9 S10 S11 ... S254 S255

| | | | |
|---|---|---|---|
| SZ-FW1 | | | Z1 |
| SZ-FW2 | 1 1 1 1 | | Z2 |
| SZ-FW3 | | | Z3 |
| SZ-FW4 | | | Z4 |
| SZ-FLS 1 | | | Z5 |
| SZ-FLS 2 | 1 1 1 1 | | Z6 |
| SZ-FLS 3 | | | Z7 |
| SZ-FLS 4 | | | Z8 |
| IZ-FLS 1 | | | Z9 |
| IZ-FLS 2 | 1 1 1 1 | | Z10 |
| IZ-FLS 3 | | | Z11 |
| IZ-FLS 4 | | | Z12 |
| IZ-ELS | 1 1 1 1 | | Z13 |

Z-S6  Z-S9

## FIG 4

FW1 FW2 FW3 FW4

S0 S1 S2 S3 S4 S5 S6 S7 S8 S9 S10 S11 S12 ... S254 S255

| | | | |
|---|---|---|---|
| SZ-FW1 | 0 | | Z1 |
| SZ-FW2 | 0 | | Z2 |
| SZ-FW3 | 0 | | Z3 |
| SZ-FW4 | 0 | | Z4 |
| SZ-FLS 1 | 0 | | Z5 |
| SZ-FLS 2 | 1 | | Z6 |
| SZ-FLS 3 | 0 | | Z7 |
| SZ-FLS 4 | 0 | | Z8 |
| IZ-FLS 1 | 0 | | Z9 |
| IZ-FLS 2 | 1 | | Z10 |
| IZ-FLS 3 | 0 | | Z11 |
| IZ-FLS 4 | 0 | | Z12 |
| IZ-ELS | | | Z13 |

Z-S9

EX-OR4 =1     =1 EX-OR2

EX-OR3 =1     =1 EX-OR1